# EUROPÄISCHE PATENTSCHRIFT

(11) **EP 1 145 115 B1**
(45) Veröffentlichungstag und Bekanntmachung des Hinweises auf die Patenterteilung: **05.09.2007**
(21) Anmeldenummer: 00910524.8
(22) Anmeldetag: 02.02.2000
(51) Int. Cl.: G06F 9/42

(54) **SYSTEM UND VERFAHREN ZUR VERSCHALTUNG VON KOMPONENTEN**
SYSTEM AND METHOD FOR INTERCONNECTING COMPONENTS
SYSTEME ET PROCEDE D'INTERCONNEXION DE COMPOSANTES

(30) Priorität: 16.02.1999 DE 19906358
(43) Veröffentlichungstag der Anmeldung: 17.10.2001
(73) Patentinhaber: SIEMENS AKTIENGESELLSCHAFT, 80333 München (DE)
(72) Erfinder: JACHMANN, Thomas, D-90475 Nürnberg (DE); NEUBERGER, Klaus, D-90409 Nürnberg (DE)
(86) Internationale Anmeldenummer: PCT/DE2000/000313
(87) Internationale Veröffentlichungsnummer: WO 2000/049497

(56) Entgegenhaltungen:
- STEVE ROBINSON AND ALEX KRASILSHCHIKOV: "ActiveX Magic: An ActiveX Control and DCOM Sample Using ATL - Overview" MSDN ONLINE, [Online] Mai 1997 (1997-05), XP002146992 MSDN Online Gefunden im Internet: <URL:http://msdn.microsoft.com/msdn-online /workshop/components/activex/magic.asp> [gefunden am 2000-09-08]
- STEVE ROBINSON AND ALEX KRASILSHCHIKOV: "ActiveX Magic: An ActiveX Control and DCOM Sample Using ATL - Part 2: Building the Pusher Client Application" MSDN ONLINE, [Online] Mai 1997 (1997-05), XP002146993 MSDN Online Gefunden im Internet: <URL:http://msdn.microsoft.com/workshop/co mponents/activex/part2.asp> [gefunden am 2000-09-08]
- STEVE ROBINSON AND ALEX KRASILSHCHIKOV: "ActiveX Magic: An ActiveX Control and DCOM Sample Using ATL - Part 3: Adding a Connection Point to the Server" MSDN ONLINE, [Online] Mai 1997 (1997-05), XP002146994 MSDN Online Gefunden im Internet: <URL:http://msdn.microsoft.com/workshop/co mponents/activex/part3.asp> [gefunden am 2000-09-08]
- STEVE ROBINSON AND ALEX KRASILSHCHIKOV: "ActiveX Magic: An ActiveX Control and DCOM Sample Using ATL - Part 4: Developing the ActiveX Control" MSDN ONLINE, [Online] Mai 1997 (1997-05), XP002146995 MSDN Online Gefunden im Internet: <URL:http://msdn.microsoft.com/workshop/co mponents/activex/part4.asp> [gefunden am 2000-09-08]
- "The Component Object Model Specification - Version 0.9" MICROSOFT COM RESOURCES, [Online] 24. Oktober 1995 (1995-10-24), XP002146997 Microsoft COM Resources Gefunden im Internet: <URL:http://www.microsoft.com/COM/resource s/COM1598C.ZIP> [gefunden am 2000-09-08]
- MARKUS HORSTMANN AND MARY KIRTLAND: "DCOM Architecture" MSDN LIBRARY, [Online] 23. Juli 1997 (1997-07-23), XP002146996 MSDN Library Gefunden im Internet: <URL:http://msdn.microsoft.com/library/bac kgrnd/html/msdn_dcomarch.htm> [gefunden am 2000-09-08]
- LEWANDOWSKI S M: "Frameworks for component-based client/server computing" ACM COMPUTING SURVEYS, [Online] Bd. 30, Nr. 1, März 1998 (1998-03), Seiten 3-27, XP002147081 ACM, USA ISSN: 0360-0300 ACM Digital Library Gefunden im Internet: <URL:http://www.acm.org/pubs/articles/jour nals/surveys/1998-30-1/p3-lewandowski/p3-l ewandowski.pdf> [gefunden am 2000-09-11]

## Beschreibung

Die Erfindung betrifft ein System sowie ein Verfahren zur Verschaltung von Komponenten, insbesondere von Softwarekomponenten mindestens einer Datenverarbeitungsanwendung.

Ein derartiges System kommt beispielsweise im Umfeld von Software-Anwendungen zum Einsatz. Hierbei besteht häufig der Wunsch, die einzelnen Anwendungen aus wiederverwendbaren Komponenten aufzubauen. Hierdurch entsteht die Notwendigkeit, die einzelnen Komponenten in verschiedenen Kombinationen miteinander zu verschalten. Die Verschaltung von Komponenten erfolgt dabei in der Regel durch spezielle Progammierung, sogenannten "GLUE-Code", was mit einem erheblichen Aufwand verbundensein kann.

Ein solches System wird zum Beispiel beschrieben in Steve Robinson et al.: "ActiveX Magic: An ActiveX Control and DCOM Sample Using ATL - Part 3: Adding a Connection Point to the Server"*.* Dieses Dokument offenbart ein System zur Verschaltung von Komponenten, insbesondere von Softwarekomponenten mindestens einer Datenverarbeitungsanwendung, wobei die Komponenten mindestens eine Schnittstelle aufweisen zur Verschaltung der Komponenten.

Der Erfindung liegt die Aufgabe zugrunde, ein System und ein Verfahren zur Verschaltung von Komponenten anzugeben, das eine Verschaltung der Komponenten ohne spezielle Programmierung beispielsweise in Form von sogenanntem "Glue-Code" ermöglicht.

Diese Aufgabe wird durch ein System und ein Verfahren mit den in den Ansprüchen 1 bzw. 6 angegebenen Merkmalen gelöst.

Dabei werden die Schnittstellen, beispielsweise Ein-/Ausgabeschnittstellen entweder direkt oder über Zwischenschaltung der Verschaltungskomponenten miteinander verschaltet. Der Aufwand bei der Verschaltung der Komponenten ist somit wesentlich verringert. Außerdem ist es möglich, die Komponenten in wiederverwendbarer Weise in unterschiedlichen Konfigurationen miteinander zu verschalten. Eine spezielle Verbindungsprogrammierung beispielsweise in Form von "GLUE-Code" entfällt vollständig, es ist lediglich eine einfache Verbindungsparametrierung erforderlich. Insgesamt kommt es zu einer

Verlagerung der Verschaltungs-Intelligenz von einem die Komponenten umgebenden Container in die Komponenten selbst. Hierdurch wird es möglich, den Container einfacher zu gestalten, da er nicht einmal mehr skript- oder programmierfähig. zu sein braucht.

Eine Verlagerung der Verschaltungs-Intelligenz von einem die Komponenten umgebenden Container hin zu den Komponenten selbst kann dadurch sichergestellt werden, daß die Verschaltungskomponenten Informationen enthalten, die zum Verschalten von Komponenten vorgesehen sind.

Eine vorteilhafte Anwendungsmöglichkeit besteht darin, daß die Komponenten als ActiveX-Komponenten, insbesondere als Eingabe- und Ausgabekomponenten ausgebildet sind.

Der Aufgabe einer Adapterfunktion der Verschaltungskomponente kann dadurch Rechnung getragen werden, daß die Verschaltungskomponente zur selbsttätigen aktiven Kopplung und/oder Adaption nicht oder nicht ganz zusammenpassender Schnittstellen vorgesehen ist.

Der Aufwand beispielsweise an Speicherplatz zur Speicherung von Verschaltungsinformationen und speziellen Containerkonfigurationen kann dadurch deutlich reduziert werden, daß die Komponenten zur mehrfachen Verschaltung mit weiteren Komponenten vorgesehen sind.

Im folgenden wird die Erfindung anhand der in den Figuren dargestellten Ausführungsbeispiele näher beschrieben und erläutert.

Es zeigen:
- FIG 1: ein Blockschaltbild eines Ausführungsbeispiels eines Systems zur Verschaltung von Komponenten mit direkter Verschaltung der Komponenten und
- FIG 2: ein weiteres Ausführungsbeispiel eines Systems zur Verschaltung von Komponenten mit Verschaltung der Komponenten über eine zwischengeschaltete Verschaltungskomponente.

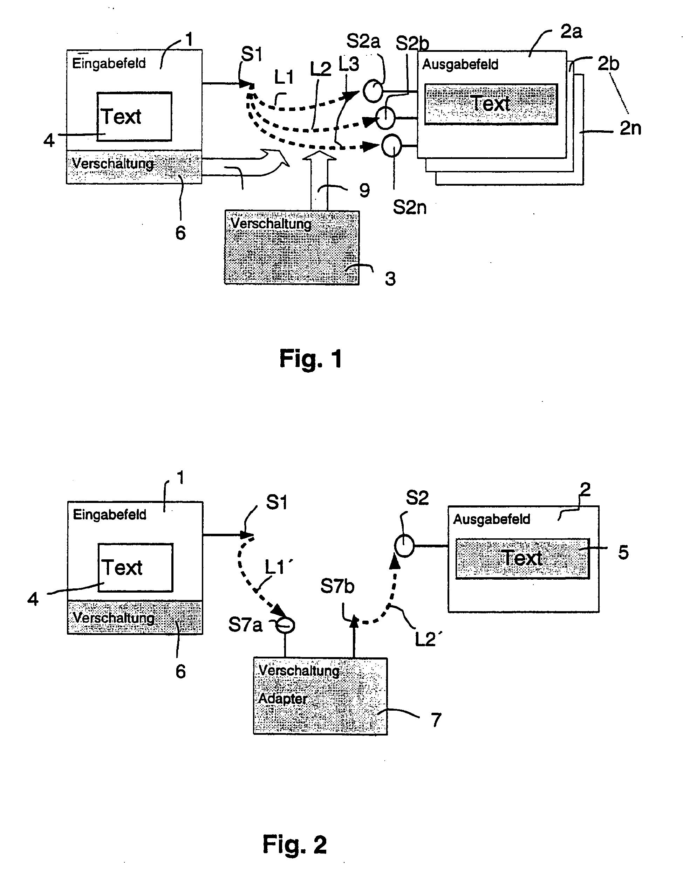

FIG 1 zeigt ein Blockschaltbild eines ersten Ausführungsbeispiel eines Systems zur Verschaltung von Komponenten 1, 2a..2n mit direkter Verschaltung der Komponenten 1, 2a..2n. Bei der ersten Komponente 1 handelt es sich beispielsweise um eine Eingabekomponente, die ein Eingabetextfeld 4 aufweist. Darüber hinaus ist in der Eingabekomponente 1 eine Verschaltungsinformation 6 enthalten, die Verschaltungsinformationen zur Verschaltung einer Schnittstelle S1 der Eingabekomponente 1 mit weiteren Komponenten 2a..2n enthält. Bei den weiteren Komponenten 2a..2n handelt es sich beispielsweise um Ausgabekomponenten, die ein Ausgabetextfeld 5 zur Ausgabe eines im Eingabetextfeld 4 der ersten Komponente eingebbaren Textes aufweisen. Die weiteren Komponenten 2a..2n weisen darüber hinaus jeweils eine Schnittstelle S2a..S2n auf, die jeweils mit der Schnittstelle S1 verschaltbar sind. Neben der lokalen Verschaltungsinformation 6 in der ersten Eingabekomponente 1 ist bei dem in FIG 1 dargestellten Ausführungsbeispiel darüber hinaus eine zentrale Verschaltungsinformation 3 vorgesehen, die beispielsweise zentral gespeicherte Verschaltungsinformationen zum Verschalten der Komponenten 1, 2a..2n enthält. Die lokale Verschaltungsinformation 6 sowie die zentrale Verschaltungsinformation 3 steuert somit über in der FIG 1 als Pfeile 8, 9 angedeutete Signalflüsse die Verschaltung der Komponenten 1, 2a..2n.

Die Besonderheit des in FIG 1 dargestellten Systems zur Verschaltung von Softwarekomponenten 1, 2a..2n besteht darin, daß die Komponenten 1, 2a..2n ohne aufwendige Programmierung, sogenannten "GLUE-Code" miteinander verbunden werden, sondern die Komponenten werden über die Schnittstellen S1, S2..S2n, die in der Regel ohnehin bei Softwarekomponenten 1, 2a..2n vorhanden sind, miteinander verbunden. Ein Anwendungsbeispiel ist beispielsweise die Verschaltung von sogenannten ActiveX-Komponenten im Microsoft Windows-Umfeld. So können beispielsweise ActiveX-Komponenten beispielsweise aus dem Internet-Explorer, aus Visual Basic, etc. miteinander verschaltet werden. Die Eingabekomponente 1 nutzt als Eingabefeld beispielsweise ein definiertes Outgoing-Com-Interface S1. Bei Änderungen im Eingabefeld 4 wird der geänderte Text über die Schnittstelle S1 über die gestrichelt eingezeichneten Linien Ll..Ln an die Schnittstellen 2a..2n, d.h. die Interfaces der Ausgabekomponenten 2a..2n verschaltet. Die für die Verschaltung der Komponenten 1, 2a..2n erforderliche Verschaltungs-Intelligenz ist bei dem in FIG 1 dargestellten Ausführungsbeispiel entweder in der Komponente 1 als Verschaltungsinformation 6 lokal vorhanden oder sie wird an einen zentralen Ort als Verschaltungsinformation 3 zentral verwaltet. Durch die Verlagerung der Verschaltungs-Intelligenz von einen die Komponenten umgebenden Container, der in FIG 1 aus Gründen der Übersichtlichkeit nicht näher dargestellt ist, in die Komponenten 1, 2a..2n hinein, wird es möglich, den Container einfacher zu gestalten. Der Container braucht hierdurch nicht mehr skript- oder programmierfähig zu sein, wodurch sich eine weitergehend Unabhängigkeit von tatsächlich verwendeten Containern ergibt.

FIG 2 zeigt ein weiteres Ausführungsbeispiel eines Systems zur Verschaltung von Komponenten 1, 2. Die Verschaltung der Komponenten 1, 2 erfolgt bei dem in FIG 2 dargestellten Ausführungsbeispiel nicht direkt über die Schnittstellen S1, S2 der Komponenten 1, 2, sondern durch Zwischenschaltung einer speziellen Verschaltungskomponente 7. Die Verschaltungskomponente 7 weist Schnittstellen S7a, S7b auf, wobei die Schnittstelle S1 der Eingabekomponente mit der Schnittstelle S7a der Verschaltungskomponente verschaltet wird. In ähnlicher Weise ist die Ausgabeschnittstelle S7b der Verschaltungskomponente 7 mit der Eingangsschnittstelle S2 der Ausgabekomponente 2 verschaltet:

Durch die Verwendung der Verschaltungskomponente 7, deren Aufgabe es ist, die Eingabekomponente S1 und die Ausgabekomponente 2 miteinander zu verschalten, besteht auch die Möglichkeit eine Adapterfunktionalität zu bewerkstelligen. Diese Adapterfunktionalität kann beispielsweise darin bestehen, das die Schnittstellen zweier Komponenten 1, 2, welche nicht exakt übereinstimmen, durch die Verschaltungskomponente 2 einer Anpassung unterzogen werden. So ist ein Mapping beispielsweise aus Methodenbasis möglich, die auch im Falle von Fenparametern beispielsweise Standardwerte ergänzt, Bereichskonvertierung durchführt etc.. Zur Begriffserklärung wird beispielsweise auf das Buch "Activ X und OLE verstehen" von David Chappell, Microsoft Press, Unterschleißheim verwiesen.

Zusammenfassend betrifft die Erfindung somit ein System und ein Verfahren zur Verschaltung von Komponenten 1, 2a..2n, insbesondere von Software- Komponenten mindestens einer Datenverarbeitungsanwendung. Für eine Verschaltung der Komponenten 1, 2a..2n ohne spezielle Programmierung beispielsweise in Form von sogenanntem "Glue-Code" wird vorgeschlagen, daß die Komponenten 1, 2a..2n mindestens eine Schnittstelle S1, S2a..S2n aufweisen, die zur direkten Verschaltung der Komponenten 1, 2a..2n vorgesehen sind. Bei einer alternativen Ausführungsform weisen die Komponenten 1, 2 Schnittstellen S1, S2 auf, die über eine Verschaltungskomponente 7 miteinander verschaltet werden.

## Patentansprüche

1. System zur Verschaltung von Komponenten (1, 2a., 2n; 1, 2), insbesondere von Softwarekomponenten mindestens einer Datenverarbeitungsanwendung, wobei die Komponenten (1, 2a..2n; 1, 2) mindestens eine Schnittstelle (S1, S2a..S2n; S1, S2) aufweisen, die zur Verschaltung der Komponenten (1, 2a..2n; 1, 2) mittels einer Verschaltungskomponente (7) vorgesehen sind, wobei die Versehaltungskvmponente (7) Informationen enthält, die zum Verschalten der Komponenten (1, 2a..2n; 1, 2) erforderlich sind und wobei die für die Verschaltung der Komponenten (1, 2a..2n; 1, 2) erforderlichen Informationen nicht in einem die Komponenten umgebenden Container enthalten sind.

2. System nach Anspruch 1,
**dadurch gekennzeichnet,**
**dass** die für die Verschaltung der Komponenten (1, 2a..2n; 1, 2) erforderliche Verschaltungs-Intelligenz in den Komponenten (1, 2a..2n; 1, 2) als Verschaltungsinformation (6) lokal vorhanden ist.

3. System nach einem der vorhergehenden Ansprüche,
**dadurch gekennzeichnet,**
**daß** die Komponenten (1, 2a..2n; 1, 2) als ActiveX-Komponenten, insbesondere als Eingabe- und Ausgabekomponenten ausgebildet sind.

4. System nach einem der vorhergehenden Ansprüche,
**dadurch gekennzeichnet,**
**daß** die Verschaltungskomponente (7) zum Suchen von zusammenpassenden Schnittstellen (S1, S2a..S2n; S1, S2) der zu verschaltenden Komponenten (1, 2a..2n; 1, 2) vorgesehen ist.

5. System nach einem der vorhergehenden Ansprüche,
**dadurch gekennzeichnet,**
**daß** die Komponenten (1, 2a..2n; 1, 2) zur mehrfachen Verschaltung mit weiteren Komponenten vorgesehen sind.

6. Verfahren zur Verschaltung von Komponenten (1, 2a..2n; 1, 2), insbesondere von Softwarekomponenten mindestens einer Datenverarbeitungsanwendung, bei dem die Komponenten (1, 2a..2n; 1, 2) über mindestens eine Schnittstelle (S1, S2a..S2n; S1, S2) mittels einer Verschaltungskomponente (7) verschaltet werden, wobei die Verschaltungskomponente (7) Informationen enthält, die zum Verschalten der Komponenten (1, 2a..2n; 1, 2) erforderlich sind und wobei die für die Verschaltung der Komponenten (1, 2a..2n; 1, 2) erforderlichen Informationen nicht in einem die Komponenten umgebenden Container enthalten sind.

7. Verfahren nach Anspruch 6,
**dadurch gekennzeichnet**
**dass** die für die Verschaltung der Komponenten (1, 2a..2n; 1, 2) erforderliche Verechaltungs-Intelligenz in den Komponenten (1, 2a..2n; 1, 2) als Verschaltungsinformation (6) lokal vorhanden ist.

8. Verfahren nach Anspruch 6 oder 7,
**dadurch gekennzeichnet,**
**daß** die Komponenten (1, 2a..2n; 1, 2) als ActiveX-Komponenten, insbesondere als Eingabe- und Ausgabekomponenten ausgebildet sind.

9. Verfahren nach einem der Ansprüche 6 bis 8,
**dadurch gekennzeichnet,**
**daß** die Verschaltungskomponente (7) zusammenpassende Schnittstellen (S1, S2a..S2n; S1, S2) der zu verschaltenden Komponenten (1, 2a..2n; 1, 2) sucht.

10. Verfahren nach einem der Ansprüche 6 bis 9,
**dadurch gekennzeichnet,**
**daß** die Komponenten (1, 2a..2n; 1, 2) für eine mehrfache Verschaltung mit weiteren Komponenten verwendet werden.

## Claims

1. System for interconnection of components (1, 2a..2n; 1, 2), in particular of software components for at least one data processing application, with the components (1, 2a..2n; 1, 2) having at least one interface (S1, S2a..S2n; S1, S2) which is intended for interconnection of the components (1, 2a..2n; 1, 2) by means of an interconnection component (7), with the interconnection component (7) containing information which is required for interconnection of the components (1, 2a..2n; 1, 2), and with the information which is required for the interconnection of the components (1, 2a..2n; 1, 2) not being contained in a container which surrounds the components.

2. System according to Claim 1,
**characterized**
**in that** the interconnection intelligence, which is required for the interconnection of the components (1, 2a..2n; 1, 2), in the components (1, 2a..2n; 1, 2) is provided locally as interconnection information (6).

3. System according to one of the preceding claims,
**characterized**
**in that** the components (1, 2a..2n; 1, 2) are in the form of ActiveX components, in particular input and output components.

4. System according to one of the preceding claims,
**characterized**
**in that** the interconnection component (7) is intended for components (1, 2a..2n; 1, 2) which are to be interconnected to search for matching interfaces (S1, S2a..S2n; S1, S2) .

5. System according to one of the preceding claims,
**characterized**
**in that** the components (1, 2a..2n; 1, 2) are intended for multiple interconnection with further components.

6. Method for interconnection of components (1, 2a..2n; 1, 2), in particular of software components for at least one data processing application, in which the components (1, 2a..2n; 1, 2) are interconnected via at least one interface (S1, S2a..S2n; S1, S2), by means of an interconnection component (7), with the interconnection component (7) containing information which is required for interconnection of the components (1, 2a..2n; 1, 2), and with the information which is required for the interconnection of the components (1, 2a..2n; 1, 2) not being contained in a container which surrounds the components.

7. Method according to Claim 6,
**characterized**
**in that** the interconnection intelligence, which is required for the interconnection of the components (1, 2a..2n; 1, 2) in the components (1, 2a..2n; 1, 2) is provided locally as interconnection information (6).

8. Method according to Claim 6 or 7,
**characterized**
**in that** the components (1, 2a..2n; 1, 2) are in the form of ActiveX components, in particular input and output components.

9. Method according to one of Claims 6 to 8,
**characterized**
**in that** the interconnection component (7) searches for matching interfaces (S1, S2a..S2n; S1, S2) from components (1, 2a..2n; 1, 2) which are to be interconnected.

10. Method according to one of Claims 6 to 9,
**characterized**
**in that** the components (1, 2a..2n; 1, 2) are used for multiple interconnection with further components.

## Revendications

1. Système d'interconnexion de composants (1, 2a...2n ; 1, 2), notamment de composants logiciels d'au moins une application informatique, les composants (1, 2a...2n ; 1, 2) comportant au moins une interface (S1, 52...S2n ; S1, S2) qui est destinée à l'interconnexion des composants (1, 2a...2n; 1, 2) au moyen d'un composant d'interconnexion (7), le composant d'interconnexion (7) contenant des informations qui sont nécessaires à l'interconnexion des composants (1, 2a...2n ; 1, 2) et les informations nécessaires à l'interconnexion des composants (1, 2a...2n ; 1, 2) n'étant pas contenues dans un conteneur entourant les composants.

2. Système selon la revendication 1, **caractérisé en ce que** l'intelligence d'interconnexion nécessaire à l'interconnexion des composants (1, 2a...2n ; 1, 2) se trouve localement dans les composants (1, 2a...2n ; 1, 2) sous la forme d'informations d'interconnexion (6).

3. Système selon l'une des revendications précédentes, **caractérisé en ce que** les composants (1, 2a...2n ; 1, 2) sont conformément en composants ActiveX, notamment en composants d'entrée et de sortie.

4. Système selon l'une des revendications précédentes, **caractérisé en ce que** le composant d'interconnexion (7) est destiné à rechercher des interfaces qui s'adaptent ensemble (S1, S2a...S2n ; S1, S2) des composants (1, 2a...2n ; 1, 2) à interconnecter.

5. Système selon l'une des revendications précédentes, **caractérisé en ce que** les composants (1, 2a...2n ; 1, 2) sont destinés à l'interconnexion multiple avec d'autres composants.

6. Procédé d'interconnexion de composants (1, 2a...2n ; 1, 2), notamment de composants logiciels d'au moins une application informatique, dans lequel les composants (1, 2a...2n ; 1, 2) sont interconnectés au moyen d'un composant d'interconnexion (7) par le biais d'une interface (S1, S2a...S2n ; S1, S2), le composant d'interconnexion (7) contenant des informations qui sont nécessaires à l'interconnexion des composants (1, 2a...2n ; 1, 2) et les informations nécessaires à l'interconnexion des composants (1, 2a...2n ; 1, 2) ne sont pas contenues dans un conteneur entourant les composants.

7. Procédé selon la revendication 6, **caractérisé en ce que** l'intelligence d'interconnexion nécessaire à l'interconnexion des composants (1, 2a...2n ; 1, 2) se trouve localement dans les composants (1, 2a...2n ; 1, 2) sous la forme d'information d'interconnexion (6).

8. Procédé selon la revendication 6 ou 7, **caractérisé en ce que** les composants (1, 2a...2n ; 1, 2) sont conformés en composants ActiveX, notamment en composants d'entrée et de sortie.

9. Procédé selon l'une des revendications 6 à 8, **caractérisé en ce que** le composant d'interconnexion (7) recherche des interfaces qui s'adaptent ensemble (S1, S2a...S2n ; S1, S2) des composants (1, 2a...2n ; 1, 2) à interconnecter.

10. Procédé selon l'une des revendications 6 à 9, **caractérisé en ce que** les composants (1, 2a...2n ; 1, 2) sont utilisés pour l'interconnexion multiple avec d'autres composants.
